# EUROPÄISCHE PATENTSCHRIFT

(11) **EP 2 645 296 B1**
(45) Veröffentlichungstag und Bekanntmachung des Hinweises auf die Patenterteilung: **13.03.2019**
(21) Anmeldenummer: 13159764.3
(22) Anmeldetag: 18.03.2013
(51) Int. Cl.: G06F 21/87, G06F 21/88

(54) **Steuereinheit zur Überwachung eines Verschlüsselungsgeräts**
Control unit for monitoring an encryption device
Unité de commande pour la surveillance d'un appareil de cryptage

(30) Priorität: 28.03.2012 DE 102012204984
(43) Veröffentlichungstag der Anmeldung: 02.10.2013
(73) Patentinhaber: Siemens Aktiengesellschaft, 80333 München (DE)
(72) Erfinder: Hertlein, Klaus, 90579 Langenzenn (DE); Hölle, Rainer, 90542 Eckental (DE)

(56) Entgegenhaltungen:
- EP-A1- 2 031 537
- WO-A1-2006/092149
- US-A1- 2006 005 264
- US-A1- 2007 171 059
- US-A1- 2008 141 382

## Beschreibung

Die Erfindung betrifft ein System aus der Steuereinheit und einem Verschlüsselungsgerät, ein Verfahren zur Überwachung eines Verschlüsselungsgeräts sowie ein Computerprogrammprodukt.

Elektronische Geräte, wie zum Beispiel Krypto-PCs, zur Verschlüsselung von Daten müssen gegen Abhören und Manipulation durch ein Eindringen von außen geschützt werden. Ein Schutz gegen Abhören wird durch eine Ausführung des Verschlüsselungsgeräts erreicht, welche verhindert, dass elektromagnetische Strahlung nach außen dringt. Nur bei Vorliegen einer unversehrten Außenummantelung des Verschlüsselungsgeräts ist somit ein Abhören der verschlüsselten Daten durch eine geeignete Vorrichtung unmöglich. Sollte die äußere Ummantelung aber beschädigt oder durch Einwirken einer mechanischen Kraft zerstört werden, wäre ein ungehindertes Abhören der verschlüsselten Daten durch eine geeignete Vorrichtung, wie zum Beispiel eine versteckte Antenne, möglich. Daher müssen solche Verschlüsselungsgeräte gegen ein Eindringen durch die abhörsichere Ummantelung eines Verschlüsselungsgeräts geschützt werden.

Im Stand der Technik werden Geräte zur Datenverschlüsselung mittels spezieller Taster oder GORE-Folien überwacht, welche bei Öffnen des Verschlüsselungsgeräts einen Alarm auslösen. Gleichzeitig wird dabei das Verschlüsselungsgerät dazu veranlasst, einen stattfindenden Prozess der Verschlüsselung von Daten umgehend einzustellen.

Diese Schutzmaßnahmen detektieren jedoch nicht:
- ein Anbohren der äußeren Ummantelung des Verschlüsselungsgeräts, um das Verschlüsselungsgerät und die jeweils aktiven Schutzmaßnahmen im Inneren des Verschlüsselungsgeräts auszuspähen,
- ein Aufschneiden der äußeren Ummantelung des Verschlüsselungsgeräts an Stellen, welche nicht durch Taster überwacht werden, und/oder
- eine Veränderung einer räumlichen Position des Verschlüsselungsgeräts zum Beispiel im Rahmen eines Diebstahls über den das Verschlüsselungsgerät an einen anderen Ort transportiert wird.

Die EP 2 031 537 A1 offenbart eine Methode zum Schutz von Verschlüsselungsschaltkreisen (Cryptographic processing Circiuts). Das System besteht aus verschiedenen Sensoren, welche mit Micro Controller basieren-den Sicherheits-Monitoren verbunden sind. Die Sicherheitsmonitore sind redundant ausgelegt und können sich gegenseitig überwachen, um auf Ausfälle von Sicherheitsmonitoren zu reagieren. Das System kann mit verschiedenen Profilen auf Änderungen an den Sensoren reagieren, um z.B. bei hoher und niedriger Temperatur die Batterielaufzeit zu verlängern, indem die Abtastrate verringert wird. Gleiches gilt für niedrige Batteriespannung. Es kann abgestuft auf die Sensoren reagieren, um bestimmte Prozesse auszusetzen oder Speicher zu löschen.

In der US 2008/141382 A1 wird eine Erweiterung offenbart, die zu bestehenden Systemen kompatibel ist, und mit der Teile des bestehenden Systems deaktiviert oder zerstört werden können. Es handelt sich um eine Baugruppe, welche in bestehende Systeme nachgerüstet werden kann. Sie erkennt, ob in das System unberechtigt eingedrungen wird oder ob sich das System außerhalb normaler Betriebsparameter befindet (z.B. Flugzeugabsturz). Zur Detektierung können verschiedene Sensoren benutzt werden - Röntgen-, UV-, Schalter-, Beschleunigungs- Mikrowellen-, Licht-, Infrarot und Mikrowellen-Sensoren. Die Baugruppe kann eine PCI-, PCIe, VME-Bus oder eine andere Plug-and-Play Baugruppe sein. Die Baugruppe enthält ein "Wireless" Gerät, das Daten sendet und empfängt. Es können verschiedene Methoden verwendet werden, um die gefährdeten Teile des Systems zu zerstören: UV-Licht, EMP-Puls, ESD-Entladung, Physikalische und Chemische Zerstörung. Es können auch Software-Komponenten gelöscht bzw. unbrauchbar gemacht werden. Die Erweiterung kann sich im Gerät bewegen, um bestimmte Teile gezielt zu erreichen und zu zerstören. Die Zerstörung kann auch durch außen veranlasst werden, indem ein Befehl an die Erweiterung gesendet wird. Die Erweiterung lässt sich von außen in einen Wartungsmodus setzen, um Teile des Systems warten zu können, ohne dass eine Zerstörung ausgelöst wird. Die Erweiterung kann auch andere Teile des Systems veranlassen sich zu zerstören, indem es mit den entsprechenden Komponenten kommuniziert. Es wird aber keine Parametrierung auf bestimmte Betriebsfälle erwähnt (Transport, Lagerung oder ähnlich), sondern es wird nur auf Wartung bzw. Parameter außerhalb des üblichen Betriebes verwiesen.

In der US 2006/005264 A1 wird ein Gerät vorgeschlagen, das portable Computersysteme vor Diebstahl schützen soll. Das Gerät kann sowohl außen angeschlossen sein als auch innen eingebaut sein. Es erkennt aufgrund der Bewegung des Gerätes, dass der Computer gestohlen werden soll und löst ein Alarmsignal aus. Das Alarmsignal kann ein Signalton, ein Lichteffekt, eine E-Mail oder dergleichen sein. Zur Erkennung der Bewegung können verwendet werden: Ein Quecksilberschalter, ein Neigungssensor, eine Kamera, Ultraschall- Sender und Empfänger und ein Lichtsensor. Die Reaktion auf Bewegung ist einstellbar, damit kleine Bewegungen bei der Pin-Eingabe nicht zur Auslösung des Alarmes führen. Das Gerät kann eine Trennung vom zu überwachenden Gerät erkennen und löst ebenfalls Alarm aus. Am Gerät kann eine Tastatur für die PIN-Eingabe sein. Es kann über eine Fernbedienung scharf geschaltet werden und auch abgeschaltet werden. Eindringversuche werden nicht erkannt, am zu überwachenden Gerät werden keine Schutzmaßnahmen ausgelöst. Die Stromversorgung kommt vom zu überwachenden Gerät, wird aber durch eine Batterie ersetzt, wenn diese ausfallen sollte. Die Überwachung kann mit dem zu überwachenden Gerät kommunizieren. Es wird aber keine Parametrierung auf bestimmte Betriebsfälle erwähnt (Transport, Lagerung oder ähnlich). Die Bewegungsparameter lassen sich so einstellen, dass die Eingabe des Pin's zu keiner Auslösung des Alarmes führt.

Demgegenüber liegt der Erfindung die Aufgabe zugrunde, ein verbessertes System aus einer Steuereinheit und einem Verschlüsselungsgerät, ein verbessertes Verfahren zur Überwachung eines Verschlüsselungsgeräts sowie ein verbessertes Computerprogrammprodukt zu schaffen.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Das vorliegende Verfahren bietet in vorteilhafter Weise eine Möglichkeit, eine Veränderung einer räumlichen Positionierung des Verschlüsselungsgerätes sowie eine mechanische Beschädigung der äußeren Ummantelung eines Verschlüsselungsgerätes zu detektieren und dabei erste Maßnahmen einzuleiten, die dem Schutz der verschlüsselten Daten dienen. So kann z.B. durch ein Anschließen von spezifisch konfigurierten Bewegungssensoren an die Sensoreinheit der Steuereinheit eine unerwünschte Veränderung einer räumlichen Positionierung des Verschlüsselungsgeräts von der Sensoreinheit detektiert und an die Verarbeitungseinheit des Verschlüsselungsgeräts als eine Abweichung vom Normalzustand übermittelt werden, sodass die Verarbeitungseinheit dem Verschlüsselungsgerät über eine geeignete Schnittstelle eine erste Information zur Verfügung stellen kann, dass das Verschlüsselungsgerät in eine vom Normalzustand abweichende räumliche Positionierung gebracht wurde. Ebenso kann durch einen Anschluss von Licht- und/oder Geräuschsensoren an die Sensoreinheit des Verschlüsselungsgeräts ein Einwirken einer unerwünschten mechanischen und/oder elektromagnetischen Kraft auf zum Beispiel die äußere Ummantelung des Verschlüsselungsgeräts detektiert werden.

Dabei kann die Sensoreinheit durch eine Auswertung der registrierten Impulse ermitteln, ob die jeweils einwirkende mechanische und/oder elektromagnetische Kraft eine Gefahr mit Umgehung der aktiven Sicherheitsvorkehrungen darstellt. Würden die von den Licht- und Geräuschsensoren registrierten Impulse von der Sensoreinheit als eine Gefährdung der Sicherheit der zu verschlüsselnden Daten klassifiziert werden, so kann diese Information an die Verarbeitungseinheit weitergegeben werden. Die Verarbeitungseinheit kann dann wiederum diese Information über das Vorliegen eines Sicherheitsrisikos über eine geeignete Schnittstelle dem zu überwachenden Verschlüsselungsgerät zur Verfügung stellen. Je nach Konfiguration des Verschlüsselungsgeräts kann dieses dann dazu veranlasst werden, Maßnahmen zum Schutz der Daten einzuleiten.

Nach einer Ausführungsform der Erfindung ist die Steuereinheit mit einer Schnittstelle für den Anschluss externer Logik versehen, wobei die externe Logik einen Betriebszustandsregler des Verschlüsselungsgeräts umfasst, der dazu ausgebildet ist, einen Betriebszustand des Verschlüsselungsgeräts zu ändern, wobei die Verarbeitungseinheit dazu ausgebildet ist, als eine Reaktion auf die erste Information eine zweite Information an die externe Logik zu senden, wobei die zweite Information signalisiert, dass die Bewegung des Verschlüsselungsgeräts und/oder das Einwirken der mechanischen und/oder elektromagnetischen Kraft auf das Verschlüsselungsgerät stattfindet, wobei die zweite Information den Betriebszustandsregler dazu veranlasst, den Betriebszustand des Verschlüsselungsgeräts zu ändern.

Dies kann den Vorteil haben, dass die Verarbeitungseinheit der Steuereinheit über eine Verbindung mit einer externen Logik, wie zum Beispiel einen potenzialfreien Relaiskontakt zu einem An- und/oder Aus-Schalter des zu überwachenden Verschlüsselungsgeräts, einen direkten Einfluss auf den Betriebszustand des zu überwachenden Verschlüsselungsgeräts haben kann. Die Verarbeitungseinheit kann somit dem zu überwachenden Verschlüsselungsgerät nicht nur eine erste Information zur Verfügung stellen, ob eine Gefährdung der zu verschlüsselnden Daten vorliegt, sondern auch selber direkt den Betriebszustand des Verschlüsselungsgeräts beeinflussen.

So kann zum Beispiel die Verarbeitungseinheit der Steuereinheit nach vorherigem Erhalt der Information von der Sensoreinheit, dass das Verschlüsselungsgerät in eine vom Normalzustand abweichende räumliche Position gebracht wurde oder dass die äußere Ummantelung des zu überwachenden Verschlüsselungsgeräts durch Einwirken einer mechanischen Kraft beschädigt oder partiell zerstört wurde, eine extern geschaltete Logik dazu veranlassen, den Verschlüsselungsprozess der Daten zu unterbrechen, indem durch einen Relaiskontakt der Aus-Schalter zur Bestimmung des Betriebszustandes des überwachenden Verschlüsselungsgeräts aktiviert würde. So wäre es auch bei einem Eindringen in das Innere des Verschlüsselungsgeräts unmöglich, die zu verschlüsselnden Daten abzuhören. Auch bei einer unerwünschten Entwendung des Verschlüsselungsgeräts im Rahmen eines Diebstahls wäre es für den Eindringling nicht möglich, die zu verschlüsselnden Daten zu manipulieren oder abzuhören.

Nach einer Ausführungsform der Erfindung ist die Verarbeitungseinheit weiter dazu ausgebildet, eine Warnmeldung an das Verschlüsselungsgerät zu senden, im Falle, dass die zweiten Signale signalisieren, dass die Bewegung des Verschlüsselungsgeräts und/oder das Einwirken der mechanischen und/oder der elektromagnetischen Kraft auf das Verschlüsselungsgerät stattfindet.

Dies kann den Vorteil haben, dass je nach Definition und technischer Umsetzung einer Warnmeldung differenzierte, und möglicherweise nach außen optisch sichtbaren und/oder akustischen Warnmeldungen abgegeben und/oder vordefinierte Sicherheitsmaßnahmen, möglicherweise auch durch weitere Schnittstellen getroffen werden können. Je nach Definition der Warnmeldung und/oder Konfigurierung der empfangenen Schnittstelle des zu überwachenden Verschlüsselungsgeräts kann die in einer Warnmeldung inhärente Information unterschiedlich umgesetzt werden, wobei eine Anpassung an gegebene Umgebungsparameter, eine Anpassung an die Ausführungsform des zu überwachenden Verschlüsselungsgeräts und/oder eine Anpassung an den jeweiligen Einsatzbereich der Steuereinheit und des überwachenden Verschlüsselungsgeräts erfolgen kann.

Nach einer Ausführungsform der Erfindung umfasst die Steuereinheit weiter ein Konfigurationsmodul, wobei das Konfigurationsmodul dazu ausgebildet ist:
- eine Konfiguration der Sensoren bereitzustellen,
- ein Reaktionsprofil der Sensoren bei der Bewegung des Verschlüsselungsgeräts und/oder bei dem Einwirken der mechanischen Kraft auf das Verschlüsselungsgerät bereitzustellen, wobei das Konfigurationsmodul dazu ausgebildet ist, eine dritte Information oder die Konfiguration der Sensoren und/oder über das Reaktionsprofil der Sensoren an die Verarbeitungseinheit zu senden, wobei die Verarbeitungseinheit weiter dazu ausgebildet ist, dritte Informationen einer Auswertung zu unterziehen, wobei eine Bereitstellung der ersten Information und/oder der zweiten Information und/oder der Warnmeldung in Abhängigkeit von der Auswertung erfolgt.

Dies kann den Vorteil haben, dass die Verarbeitungseinheit der Steuereinheit nur dann eine erste Information über einen sicherheitskritischen Zustand des Überwachungs- und Verschlüsselungsgeräts an diese, ein Abschalten des Betriebszustandes des zu überwachenden Verschlüsselungsgeräts und/oder eine Übermittlung einer Warnmeldung an das zu überwachende Verschlüsselungsgerät nur dann stattfinden, wenn tatsächlich eine sicherheitskritische Situation vorliegt. Durch eine Auswertung der von der Sensoreinheit empfangenen Informationen bezüglich empfangener von dem Normalzustand abweichenden Signale unter zusätzlicher Berücksichtigung der sensorspezifischen Konfiguration der jeweils mit der Steuereinheit verbundenen Sensoren sowie unter Berücksichtigung des individuellen Reaktionsprofils der jeweils angeschlossenen Sensoren wird die Verarbeitungseinheit dazu befähigt, eine Klassifizierung von empfangenen Signalen als sicherheitskritisch oder als nicht-sicherheitsgefährdend vorzunehmen. Dadurch, dass ein Konfigurationsspeicher der Steuereinheit der Verarbeitungseinheit eine jeweilige Konfiguration der an der Sensoreinheit angeschlossenen Sensoren und eine Information bezüglich der individuellen Reaktionsprofile der an der Sensoreinheit angeschlossenen Sensoren zur Verfügung stellt, kann die Verarbeitungseinheit unabhängig von der Konfiguration der an der Steuereinheit angeschlossenen Sensoren eine differenzierte Aussage zur Verfügung stellen, ob die jeweils von den Sensoren empfangenen Signale einen Hinweis darauf liefern, ob eine sicherheitsgefährdende räumliche Veränderung des Verschlüsselungsgeräts und/oder eine sicherheitskritische Beschädigung der äußeren Ummantelung des Verschlüsselungsgeräts stattgefunden haben oder nicht.

Unabhängig von der Art von Konfiguration der an die Steuereinheit angeschlossenen Sensoren wird durch das Zurverfügungstellen einer Information über die Konfiguration der Sensoren und das Reaktionsprofil der Sensoren durch den Konfigurationsspeicher die Verarbeitungseinheit dazu befähigt, eine sichere Entscheidung zu treffen, ob die von den Sensoren empfangenen Signale als sicherheitskritisch einzustufen sind oder nicht. Die Steuereinheit liefert somit unabhängig von der Art von angeschlossenen Sensoren, wie zum Beispiel mehreren Bewegungs-, Licht- und/oder Geräuschsensoren eine verlässliche Information, ob ein Sicherheitsrisiko für das zu überwachende Verschlüsselungsgerät vorliegt oder nicht. Die Steuereinheit erkennt jeweils die Anzahl und die Art der angeschlossenen Sensoren und kann differenzieren zwischen einem Normalzustand des zu überwachenden Verschlüsselungsgeräts und einem die Sicherheit des zu überwachenden Verschlüsselungsgeräts bedrohenden Zustands. Auch werden nur dann Warnmeldungen bzw. Alarme von der Verarbeitungseinheit zur Verfügung gestellt, wenn tatsächlich ein sicherheitsgefährdender Zustand vorliegt. Die Zahl der Fehlalarme wird somit gleichzeitig reduziert.

Nach einer Ausführungsform der Erfindung umfassen die Sensoren Bewegungssensoren, Lichtsensoren und/oder Geräuschsensoren, wobei die Sensoren hinsichtlich des Reaktionsprofils anpassbar sind, wobei das Reaktionsprofil einen vordefinierten Grenzwert zur Bestimmung einer Empfindlichkeit der Sensoren umfasst, wobei der Grenzwert von einer räumlichen Beziehung zwischen dem Verschlüsselungsgerät und der Steuereinheit abhängt.

Dies kann den Vorteil haben, dass die Sensoren der Steuereinheit von unterschiedlicher Art sein können. Je nach Ausführungsform des zu überwachenden Verschlüsselungsgeräts und je nach Anwendungsbereich des Verschlüsselungsgeräts können die Sensoren frei gewählt und jeweils entsprechend dem Einsatzbereich angepasst konfiguriert werden. So können zum Beispiel Lichtsensoren eingesetzt werden, um den Innenraum des zu überwachenden Verschlüsselungsgeräts komplett zu überwachen, wobei eine Änderung eines von einem Lichtsensor empfangenen Signals auf ein unerwünschtes Öffnen des Verschlüsselungsgeräts hinweisen würde. Gleichfalls können Bewegungssensoren eingesetzt werden, um eine räumliche Positionsveränderung des Verschlüsselungsgeräts außerhalb einer vordefinierten Zone zu registrieren. Ebenso können Geräuschsensoren mit der Steuereinheit verbunden werden, wobei bei einer Veränderung der Geräuschkulisse auf zum Beispiel das Einwirken einer mechanischen Kraft auf die äußere Ummantelung des Verschlüsselungsgeräts hingewiesen werden kann.

Auch können zum Beispiel in Abhängigkeit einer räumlichen Beziehung zwischen dem Verschlüsselungsgerät und der Steuereinheit abgestufte Sicherheitszonen bei einer räumlichen Positionsänderung des Verschlüsselungsgeräts definiert werden, sodass zum Beispiel erst bei einer Überschreitung einer bestimmten Sicherheitszone, zum Beispiel bei Verlassen eines Gebäudes, erst ein Warnsignal von der Steuereinheit abgegeben werden würde. Die Steuereinheit lässt sich somit an den jeweiligen Einsatzbereich und an die jeweilige Ausführungsform des zu überwachenden Verschlüsselungsgeräts in vorteilhafter Weise anpassen. Das Anwendungsgebiet der überwachenden Steuereinheit ist somit weit ausgedehnt.

Nach einer Ausführungsform der Erfindung sind ein erstes Verhalten der Verarbeitungseinheit und/oder ein zweites Verhalten der Sensoreinheit anpassbar an eine Art des Verschlüsselungsgeräts und/oder an Umgebungsparameter des Verschlüsselungsgeräts und/oder an einen vordefinierten Schutzbedarf des Verschlüsselungsgeräts, wobei das erste Verhalten die Auswertung der zweiten Signale und/oder die Auswertung der dritten Signale und/oder das Erstellen der ersten Information und/ oder der zweiten Information und/oder das Senden der Warnmeldung umfasst, wobei das zweite Verhalten die Auswertung der ersten Signale umfasst.

Dies kann den Vorteil haben, dass die zu überwachende Steuereinheit an die Einsatzbedingungen des zu überwachenden Verschlüsselungsgeräts, zum Beispiel für einen Einsatz in einer Büroumgebung, bei einem Panzerschrank, bei einem Schaltschrank usw. angepasst werden kann. Ebenso kann die zu überwachende Steuereinheit bezüglich der Sensorik und deren Charakteristik spezifisch und in adäquater Weise an das zu überwachende Verschlüsselungsgerät angepasst werden. Durch eine jeweils bestimmte Konfiguration der Sensoreinheit und der Verarbeitungseinheit der Steuereinheit können verschiedene Modi der Überwachung realisiert werden, zum Beispiel eine Überwachung des Betriebs, eines Transports, einer Wartung und/oder einer Lagerung des zu überwachenden Verschlüsselungsgeräts. Ebenso können verschiedene Gefahrenpotenziale differenziert werden, da mittels der Konfiguration eingestellt werden kann, wie und ob auf die Signalausschläge an den Sensoren reagiert werden sollte.

Nach einer Ausführungsform der Erfindung umfasst die Steuereinheit weiter einen Ereignisspeicher, wobei der Ereignisspeicher dazu ausgebildet ist, die zweiten Signale mit einem Zeitstempel zu speichern.

Durch Auslesen des Ereignisspeichers können in vorteilhafter Weise Manipulations- und/oder Eindringungsversuche zeitlich eingeordnet, bewertet und/oder nachvollzogen werden.

Nach einer Ausführungsform der Erfindung weist die Steuereinheit weiter einen externen Energiepuffer auf, wobei der externe Energiepuffer dazu ausgebildet ist, die Steuereinheit mit Energie zu versorgen.

Dies kann den Vorteil haben, dass die Gesamtfunktion der erfindungsgemäßen Vorrichtung auch bei getrennter Stromversorgung des Verschlüsselungsgeräts, zum Beispiel im Transport- oder Lagerzustand, erhalten bleiben würde und das Verschlüsselungsgerät trotzdem weiter überwacht werden kann.

In einem weiteren Aspekt betrifft die Erfindung ein System aus einer Steuereinheit und einem Verschlüsselungsgerät.

Nach einer weiteren Ausführungsform der Erfindung ist das Verschlüsselungsgerät dazu ausgebildet, die Steuereinheit mit Energie zu versorgen.

Dies kann den Vorteil haben, dass die Steuereinheit auf eine eigene Schnittstelle zu externen Energiepuffern, wie zum Beispiel eine Batterie oder ein Akku, nicht angewiesen wäre.

Nach einer weiteren Ausführungsform der Erfindung bilden die Steuereinheit und das Verschlüsselungsgerät eine bauliche Einheit.

Dies kann den Vorteil haben, dass für eine Überwachung eines Verschlüsselungsgeräts kein zusätzlicher Raumbedarf bestehen würde. Zur Realisierung von verschiedenen Modi der Überwachung, wie zum Beispiel Überwachung des Betriebs des Verschlüsselungsgeräts, Überwachung des Transports des Verschlüsselungsgeräts, Wartung des Verschlüsselungsgeräts und/oder Lagerung des Verschlüsselungsgeräts wäre für eine kontinuierlich gewährleistete Überwachung kein zusätzlicher Bauraum erforderlich.

In einem weiteren Aspekt betrifft die Erfindung ein Verfahren zur Überwachung eines Verschlüsselungsgeräts, wobei das Verfahren die folgenden Schritte umfasst:
- Bereitstellung einer Steuereinheit, wobei die Steuereinheit eine Sensoreinheit und eine Verarbeitungseinheit umfasst,
Empfang erster Signale von Sensoren durch die Sensoreinheit, wobei die ersten Signale signalisieren, ob eine Bewegung des Verschlüsselungsgeräts und/oder ein Einwirken einer mechanischen und/oder elektromagnetischen Kraft auf das Verschlüsselungsgerät stattfindet,
- Sendung zweiter Signale an die Verarbeitungseinheit durch die Sensoreinheit, wobei die zweiten Signale zumindest eine erste Information enthalten, die bereits in den ersten Signalen enthalten ist,
- Zurverfügungstellung einer ersten Information über die zweiten Signale dem Verschlüsselungsgerät durch die Verarbeitungseinheit, wobei die erste Information signalisiert, dass die Bewegung des Verschlüsselungsgeräts und/oder das Einwirken der mechanischen und/oder elektromagnetischen Kraft auf das Verschlüsselungsgerät stattfindet, wobei die erste Information dazu ausgebildet ist, dass das Verschlüsselungsgerät als Reaktion Maßnahmen zum Schutz der Daten einleitet.

In einem weiteren Aspekt betrifft die Erfindung ein Computerprogrammprodukt mit von einem Prozessor ausführbaren Instruktionen zur Durchführung des obig beschriebenen Verfahrens.

Im Folgenden werden bevorzugte Ausführungsformen der Erfindung anhand der folgenden Zeichnung näher erläutert.

Es zeigt:

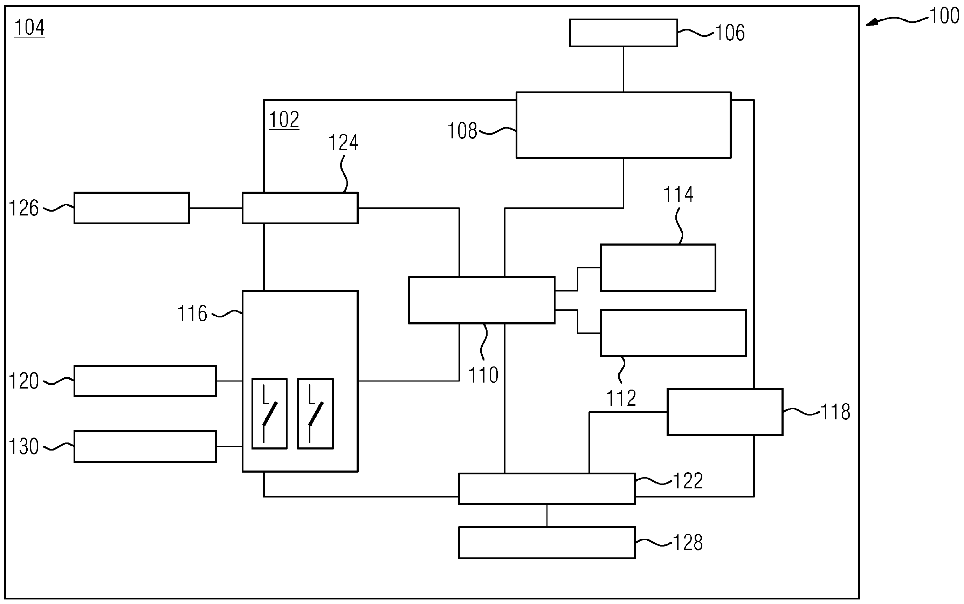

- FIG 1: ein Blockdiagramm eines Systems aus einer Steuereinheit und einem zu überwachenden Verschlüsselungsgerät.

Die FIG 1 zeigt ein Blockdiagramm eines Systems 100 aus einer Steuereinheit 102 und ein zu überwachendes Verschlüsselungsgerät 104. Die Steuereinheit 102 weist eine Sensoreinheit 108 zum Anschluss externer Sensoren 106 auf. An der Sensoreinheit 108 zum Anschluss externer Sensoren können externe Sensoren 106 angeschlossen werden. Bei den externen Sensoren 106 kann es sich um Bewegungs-, Licht- und/oder Geräuschsensoren handeln. Diese können jeweils in frei wählbarer Anzahl, mit jeweils angepasster Konfiguration und mit jeweils spezifischem Reaktionsprofil ausgeführt werden.

Die externen Sensoren 106 empfangen erste Signale, welche an die Sensoreinheit 108 zum Anschluss externen Sensoren weitergeleitet, dort empfangen und ggf. ausgewertet werden. Die Sensoreinheit sendet zweite Signale an eine Verarbeitungseinheit 110, wobei die zweiten Signale zumindest eine erste Information enthalten, die bereits in den ersten Signalen enthalten ist.

Ein Konfigurationsspeicher 112 ist direkt mit der Verarbeitungseinheit 110 verbunden und stellt der Verarbeitungseinheit 110 eine Information bezüglich einer Konfiguration der externen Sensoren 106 sowie eine Information bezüglich des Reaktionsprofils der externen Sensoren 106 zur Verfügung. Unter Berücksichtigung dieser Information wertet die Verarbeitungseinheit 110 die zweiten Signale aus.

Ergibt die Auswertung durch die Verarbeitungseinheit 110, dass die von den externen Sensoren 106 empfangenen ersten Signale eine sicherheitskritische Änderung einer räumlichen Positionierung des zu überwachenden Verschlüsselungsgerätes 104 und/oder ein gewaltsames Eindringen in den Innenraum des zu überwachenden Verschlüsselungsgeräts 104 indizieren, sendet die Verarbeitungseinheit 110 über die Schnittstellen 124 und 126 eine Information an das zu überwachende Verschlüsselungsgerät 104, dass eine die Sicherheit bedrohende Situation vorliegt.

Als ein weiteres Ergebnis der Auswertung durch die Verarbeitungseinheit 110 mit Indikation eines Sicherheitsrisikos kann die Verarbeitungseinheit 110 ein Signal an eine Schnittstelle 116 für externe Logik senden, welches von einem Betriebszustandsregler 130 des zu überwachenden Verschlüsselungsgeräts 104 als ein Triggersignal zum Beenden des Verschlüsselungsprozesses des zu überwachenden Verschlüsselungsgeräts 104 interpretiert werden kann. So kann beispielsweise im Falle, dass die Auswertung durch die Verarbeitungseinheit 110 ergeben hat, dass eine sicherheitskritische Situation für das zu überwachende Verschlüsselungsgerät 104 vorliegt, die Verarbeitungseinheit 110 ein Signal an einen potenzialfreies Relaiskontakt senden, welcher dann den Aus-Schalter des Betriebs des zu überwachenden Verschlüsselungsgeräts betätigen kann. Ebenso kann im Falle, dass die Auswertung der Verarbeitungseinheit 110 ergeben hat, dass eine sicherheitskritische Situation nicht oder nicht mehr vorliegt, ein Signal an die Schnittstelle 116 für externe Logik senden, welches ein Betätigen der Reset-Taste zur Wiederaufnahme des Betriebs des zu überwachenden Verschlüsselungsgeräts bewirken kann.

In einer weiteren Ausführungsform der Erfindung kann die Verarbeitungseinheit 110 im Falle, dass die Auswertung ergeben hat, dass eine die Sicherheit bedrohende Situation für das Verschlüsselungsgerät vorliegt, ein Warnsignal an die Schnittstelle 116 senden, welches von einer Eingangsschnittstelle 120 für Warnmeldungen des zu überwachenden Verschlüsselungsgeräts empfangen werden kann. Je nach Beschaffenheit und Empfindlichkeit der externen Sensoren 106 können unterschiedliche Warnstufen vordefiniert werden, um eine Differenzierung bezüglich einzuleitender Sicherheitsmaßnahmen durch das Verschlüsselungsgerät zu realisieren.

Direkt verbunden mit der Verarbeitungseinheit 110 ist ein Ereignisspeicher 114, welche auftretende Ereignisse, wie zum Beispiel eine Zustandsänderung der Sensoren, mit einem Zeitstempel ablegen kann. Diese mit einem Zeitstempel versehenen Ereignisse können durch eine geeignete Schnittstelle von dem zu überwachenden Verschlüsselungsgerät 104 ausgelesen werden. Versuchte Manipulations- und/oder Eindringversuche können somit zeitlich nachvollzogen und in einer nachfolgenden Analyse bewertet werden.

Über eine Schnittstelle 124, 126 zwischen Steuereinheit 102 und zu überwachendem Verschlüsselungsgerät 104 können die Steuereinheiten 102 und 104 kontinuierlich kommunizieren, indem Informationen ausgetauscht würden, ob sich die Steuereinheit in einem regulären Überwachungsmodus befindet, ob der Betrieb des zu überwachenden Verschlüsselungsgeräts 104 regulär verläuft und/oder ob ein Sicherheitsrisiko für das zu überwachende Verschlüsselungsgerät 104 vorliegt.

Die Steuereinheit 102 weist eine Schnittstelle 122 für eine Energieversorgung durch das zu überwachende Verschlüsselungsgerät 104 auf. Stellt das zu überwachende Verschlüsselungsgerät 104 über seine Schnittstelle 128 Energie zur Verfügung, so kann die Steuereinheit 102 mit Energie von dem zu überwachenden Verschlüsselungsgerät 104 versorgt werden. Sollte keine Energieversorgung durch das zu überwachende Verschlüsselungsgerät stattfinden, so greift die Steuereinheit 102 auf ihren externen Energiepuffer 118 zurück. Als externer Energiepuffer 118 können beispielsweise eine oder mehrere Batterien oder ein Akku fungieren. Besonders beim Transport oder bei einer Lagerung kann sich diese Art der Energieversorgung über einen externen Energiepuffer als vorteilhaft erweisen.

Sollte sich das zu überwachende Verschlüsselungsgerät in einem Off-Zustand zum Beispiel während des Transports oder während einer Lagerhaltung befinden, so kann durch die autonome Energieversorgung der Steuereinheit 102 mittels des externen Energiepuffers 118 trotzdem eine weitere Überwachung des Verschlüsselungsgeräts 104 stattfinden.

In FIG 1 ist eine Ausführungsform der Erfindung dargestellt, in welcher die Steuereinheit 102 und das Verschlüsselungsgerät 104 eine bauliche Einheit bilden. In einer weiteren Ausführungsform können das Verschlüsselungsgerät und die Steuereinheit 102 auch räumlich getrennt sein und über individuell konfigurierbare Schnittstellen miteinander kommunizieren.

Die externen Sensoren 106 können hinsichtlich Anzahl, Sensorik, Reaktionsprofil und räumlicher Anordnung bezüglich der Steuereinheit 102 und dem zu überwachenden Verschlüsselungsgerät 104 angepasst an den jeweiligen Einsatzbereich realisiert werden. Somit ist eine Anpassbarkeit an die jeweilige Ausführungsform des Verschlüsselungsgeräts 104 und der Steuereinheit 102 sowie deren Einsatzbereich gegeben. Durch Konfiguration der Sensoreinheit und der Verarbeitungseinheit 110, welche für eine Auswertung der durch die externen Sensoren 106 registrierten Signale verantwortlich sind, kann ein Spektrum von abgestuften Reaktionen zur Umsetzung von Sicherheitsmaßnahmen realisiert werden.

## Patentansprüche

1. System (100) aus einem Verschlüsselungsgerät (104) und einer Steuereinheit (102) zur Überwachung des Verschlüsselungsgeräts (104),
• wobei das Verschlüsselungsgerät (104) dazu ausgebildet ist, Daten zu verschlüsseln,
• wobei die Steuereinheit (102) eine Sensoreinheit (108) und eine Verarbeitungseinheit (110) umfasst,
• wobei die Sensoreinheit (108) dazu ausgebildet ist, erste Signale von Sensoren (106) zu empfangen, die zur Erfassung einer Bewegung des Verschlüsselungsgeräts (104) und/oder ein Einwirken einer mechanischen und/oder elektromagnetischen Kraft auf das Verschlüsselungsgerät (104) dienen, wobei die Sensoreinheit (108) weiter dazu ausgebildet ist, zweite Signale an die Verarbeitungseinheit (110) zu senden,
• wobei die zweiten Signale zumindest eine erste Information enthalten, die bereits in den ersten Signale enthalten ist, wobei die Verarbeitungseinheit (110) dazu ausgebildet ist, die erste Information über die zweiten Signale dem Verschlüsselungsgerät (104) zur Verfügung zu stellen, wobei die erste Information signalisiert, dass die Bewegung des Verschlüsselungsgeräts (104) und/oder das Einwirken der mechanischen und/oder elektromagnetischen Kraft auf das Verschlüsselungsgerät (104) stattfindet,
• wobei die erste Information dazu ausgebildet ist, dass das Verschlüsselungsgerät (104) als Reaktion Maßnahmen zum Schutz der Daten einleitet,
• wobei die Steuereinheit (102) mit einer Schnittstelle (116) für den Anschluss externer Logik versehen ist, wobei die externe Logik einen Betriebszustandsregler (130) des Verschlüsselungsgeräts (104) umfasst, der dazu ausgebildet ist, einen Betriebszustand des Verschlüsselungsgeräts (104) zu ändern, wobei die Verarbeitungseinheit (110) dazu ausgebildet ist, als eine Reaktion auf die erste Information eine zweite Information an die externe Logik zu senden, wobei die zweite Information signalisiert, dass die Bewegung des Verschlüsselungsgeräts (104) und/oder das Einwirken der mechanischen und/oder elektromagnetischen Kraft auf das Verschlüsselungsgerät (104) stattfindet, wobei die zweite Information den Betriebszustandsregler (130) dazu veranlasst, den Betriebszustand des Verschlüsselungsgeräts (104) zu ändern,
• wobei im Falle, dass die Auswertung durch die Verarbeitungseinheit (110) ergibt, dass eine sicherheitskritische Situation für das zu überwachende Verschlüsselungsgerät (104) vorliegt, die Verarbeitungseinheit (110) ein Signal an einen potenzialfreies Relaiskontakt sendet, welcher dann einen Aus-Schalter des Betriebs des zu überwachenden Verschlüsselungsgeräts (104) betätigt und wobei im Falle, dass die Auswertung der Verarbeitungseinheit (110) ergibt, dass eine sicherheitskritische Situation nicht oder nicht mehr vorliegt, ein Signal an die Schnittstelle (116) für externe Logik sendet, welches ein Betätigen einer Reset-Taste zur Wiederaufnahme des Betriebs des zu überwachenden Verschlüsselungsgeräts bewirkt.

2. System (100) nach Anspruch 1, wobei die Verarbeitungseinheit (110) weiter dazu ausgebildet ist, eine Warnmeldung an das Verschlüsselungsgerät (104) zu senden, im Falle, dass die zweiten Signale signalisieren, dass die Bewegung des Verschlüsselungsgeräts (104) und/oder das Einwirken der mechanischen und/oder elektromagnetischen Kraft auf das Verschlüsselungsgerät (104) stattfindet.

3. System (100) nach einem der Ansprüche 1 oder 2, wobei die Steuereinheit (102) weiter ein Konfigurationsmodul (112) umfasst, wobei das Konfigurationsmodul (112) dazu ausgebildet ist:
- eine Konfiguration der Sensoren (106) bereitzustellen,
- ein Reaktionsprofil der Sensoren (106) bei der Bewegung des Verschlüsselungsgeräts (104) und/oder bei dem Einwirken der mechanischen Kraft auf das Verschlüsselungsgerät (104) bereitzustellen,
wobei das Konfigurationsmodul dazu ausgebildet ist, eine dritte Information über die Konfiguration der Sensoren (106) und/oder über das Reaktionsprofil der Sensoren (106) an die Verarbeitungseinheit (110) zu senden, wobei die Verarbeitungseinheit (110) weiter dazu ausgebildet ist, die dritte Information einer Auswertung zu unterziehen, wobei eine Bereitstellung der ersten Information und/oder der zweiten Information und/oder der Warnmeldung in Abhängigkeit von der Auswertung erfolgt.

4. System (100) nach Anspruch 3, wobei die Sensoren (106). Bewegungssensoren (106), Lichtsensoren und/oder Geräuschsensoren umfassen, wobei die Sensoren (106) hinsichtlich des Reaktionsprofils anpassbar sind, wobei das Reaktionsprofil einen vordefinierten Grenzwert zur Bestimmung einer Empfindlichkeit der Sensoren (106) umfasst, wobei der Grenzwert von einer räumlichen Beziehung zwischen dem Verschlüsselungsgerät (104) und der Steuereinheit (102) abhängt.

5. System (100) nach einem der vorhergehenden Ansprüche, wobei ein erstes Verhalten der Verarbeitungseinheit (110) und/oder ein zweites Verhalten der Sensoreinheit (108) anpassbar sind an eine Art des Verschlüsselungsgeräts (104) und/oder an Umgebungsparameter des Verschlüsselungsgeräts (104) und/oder an einen vordefinierten Schutzbedarf des Verschlüsselungsgeräts (104), wobei das erste Verhalten die Auswertung der zweiten Signale und/oder, die Auswertung der dritten Information und/oder das Erstellen der ersten Information und/oder der zweiten Information und/oder das Senden der Warnmeldung umfasst, wobei das zweite Verhalten die Auswertung der ersten Signale umfasst.

6. System (100) nach einem der vorhergehenden Ansprüche, wobei die Steuereinheit (102) weiter einen Ereignisspeicher (114) umfasst, wobei der Ereignisspeicher (114) dazu ausgebildet ist, die zweiten Signale mit einem Zeitstempel zu speichern.

7. System (100) nach einem der vorhergehenden Ansprüche, wobei die Steuereinheit (102) weiter einen externen Energiepuffer (118) aufweist, wobei der externe Energiepuffer (118) dazu ausgebildet ist, die Steuereinheit (102) mit Energie zu versorgen.

8. System (100) nach einem der vorhergehenden Ansprüche , wobei das Verschlüsselungsgerät (104) dazu ausgebildet ist, die Steuereinheit (102) mit Energie zu versorgen.

9. System (100) nach Anspruch 8, wobei die Steuereinheit (102) und das Verschlüsselungsgerät (104) eine bauliche Einheit bilden.

10. Verfahren zur Überwachung eines Verschlüsselungsgeräts (104), wobei das Verfahren die folgenden Schritte umfasst:
- Bereitstellung einer Steuereinheit (102), wobei die Steuereinheit (102) eine Sensoreinheit (108) und eine Verarbeitungseinheit (110) umfasst,
- Empfang erster Signale von Sensoren (106) durch die Sensoreinheit (108), wobei die ersten Signale signalisieren, ob eine Bewegung des Verschlüsselungsgeräts (104) und/oder ein Einwirken einer mechanischen und/oder elektromagnetischen Kraft auf das Verschlüsselungsgerät (104) stattfindet,
- Sendung zweiter Signale an die Verarbeitungseinheit (110) durch die Sensoreinheit (108), wobei die zweiten Signale zumindest eine erste Information enthalten, die bereits in den ersten Signalen enthalten ist,
- Zurverfügungstellung der ersten Information über die zweiten Signale dem Verschlüsselungsgerät (104) durch die Verarbeitungseinheit (110), wobei die erste Information signalisiert, dass die Bewegung des Verschlüsselungsgeräts (104) und/oder das Einwirken der mechanischen und/ oder elektromagnetischen Kraft auf das Verschlüsselungsgerät (104) stattfindet, wobei die erste Information dazu ausgebildet ist, dass das Verschlüsselungsgerät (104) als Reaktion Maßnahmen zum Schutz der Daten einleitet,
- wobei über eine Schnittstelle (116) der Steuereinheit(102) eine externe Logik angeschlossen wird, die einen Betriebszustandsregler (130) des Verschlüsselungsgeräts (104) umfasst, durch den ein Betriebszustand des Verschlüsselungsgeräts (104) geändert wird, dass die Verarbeitungseinheit (110) als Reaktion auf die erste Information eine zweite Information an die externe Logik sendet, wobei die zweite Information signalisiert, dass die Bewegung des Verschlüsselungsgeräts (104) und/oder das Einwirken der mechanischen und/oder elektromagnetischen Kraft auf das Verschlüsselungsgerät (104) stattfindet, wobei die zweite Information den Betriebszustandsregler (130) dazu veranlasst, den Betriebszustand des Verschlüsselungsgeräts (104) zu ändern,
wobei im Falle, dass die Auswertung durch die Verarbeitungseinheit (110) ergibt, dass eine sicherheitskritische Situation für das zu überwachende Verschlüsselungsgerät (104) vorliegt, die Verarbeitungseinheit (110) ein Signal an einen potenzialfreies Relaiskontakt sendet, welcher dann einen Aus-Schalter des Betriebs des zu überwachenden Verschlüsselungsgeräts (104) betätigt und wobei im Falle, dass die Auswertung der Verarbeitungseinheit (110) ergibt, dass eine sicherheitskritische Situation nicht oder nicht mehr vorliegt, ein Signal an die Schnittstelle (116) für externe Logik sendet, welches ein Betätigen einer Reset-Taste zur Wiederaufnahme des Betriebs des zu überwachenden Verschlüsselungsgeräts bewirkt.

11. Computerprogrammprodukt, insbesondere digitales Speichermedium, mit von einem Prozessor ausführbaren Instruktionen zur Durchführung der Verfahrensschritte gemäß Anspruch 10.

## Claims

1. System (100) comprising an encryption device (104) and a control unit (102) for monitoring the encryption device (104),
• wherein the encryption device (104) is embodied to encrypt data,
• wherein the control unit (102) comprises a sensor unit (108) and a processing unit (110),
• wherein the sensor unit (108) is embodied to receive first signals from sensors (106) which are used to detect a movement of the encryption device (104) and/or an impact of a mechanical and/or electromagnetic force on the encryption device (104), wherein the sensor unit (108) is further embodied to send second signals to the processing unit (110),
• wherein the second signals contain at least one first item of information, which is already contained in the first signals, wherein the processing unit (110) is embodied to make the first item of information relating to the second signals available to the encryption device (104), wherein the first item of information signals that the movement of the encryption device (104) and/or the impact of the mechanical and/or electromagnetic force on the encryption device (104) is occurring,
• wherein the first item of information is embodied such that as a response the encryption device (104) introduces measures to protect the data,
• wherein the control unit (102) is provided with an interface (116) for connecting external logic, wherein the external logic comprises an operating state controller (130) of the encryption device (104), which is embodied to change an operating state of the encryption device (104), wherein the processing unit (110) is embodied, as a response to the first item of information, to send a second item of information to the external logic, wherein the second item of information signals that the movement of the encryption device (104) and/or the impact of the mechanical and/or electromagnetic force on the encryption device (104) is occurring, wherein the second item of information prompts the operating state controller (130) to change the operating state of the encryption device (104),
• wherein in the event that the result of the evaluation by means of the processing unit (110) is that a security-critical situation exists for the encryption device (104) to be monitored, the processing unit (110) sends a signal to a potential-free relay contact, which then actuates an off switch for the operation of the encryption device (104) to be monitored and wherein in the event that the result of the evaluation of the processing unit (110) is that a security-critical situation is not or no longer present, sends a signal to the interface (116) for external logic, which effects an actuation of a reset button for resuming the operation of the encryption device to be monitored.

2. System (100) according to claim 1, wherein the processing unit (110) is further embodied to send a warning message to the encryption device (104) in the event that the second signals signal that the movement of the encryption device (104) and/or the impact of the mechanical and/or electromagnetic force on the encryption device (104) is occurring.

3. System (100) according to one of claims 1 or 2, wherein the control unit (102) further comprises a configuration module (112), wherein the configuration module (112) is embodied:
- to provide a configuration of the sensors (106),
- to provide a response profile of the sensors (106) upon movement of the encryption device (104) and/or upon the mechanical force having an impact on the encryption device (104),
wherein the configuration module is embodied to send a third item of information relating to the configuration of the sensors (106) and/or relating to the response profile of the sensors (106) to the processing unit (110), wherein the processing unit (110) is further embodied to subject the third item of information to an evaluation, wherein a provision of the first item of information and/or the second item of information and/or the warning message is carried out as a function of the evaluation.

4. System (100) according to claim 3, wherein the sensors (106) comprise motion sensors (106), light sensors and/or noise sensors, wherein the sensors (106) can be adjusted with respect to the response profile, wherein the response profile comprises a predefined limit value for determining a sensitivity of the sensors (106), wherein the limit value depends on a spatial relationship between the encryption device (104) and the control unit (102).

5. System (100) according to one of the preceding claims, wherein a first behaviour of the processing unit (110) and/or a second behaviour of the sensor unit (108) can be adjusted to a type of encryption device (104) and/or to environmental parameters of the encryption device (104) and/or to a predefined protection requirement of the encryption device (104), wherein the first behaviour comprises the evaluation of the second signals and/or the evaluation of the third item of information and/or the creation of the first item of information and/or the second item of information and/or the sending of the warning message, wherein the second behaviour comprises the evaluation of the first signals.

6. System (100) according to one of the preceding claims, wherein the control unit (102) further comprises an event recorder (114), wherein the event recorder (114) is embodied to store the second signals with a time stamp.

7. System (100) according to one of the preceding claims, wherein the control unit (102) further has an external energy buffer (118), wherein the external energy buffer (118) is embodied to supply the control unit (102) with energy.

8. System (100) according to one of the preceding claims, wherein the encryption device (104) is embodied to supply the control unit (102) with energy.

9. System (100) according to claim 8, wherein the control unit (102) and the encryption device (104) form a structural unit.

10. Method for monitoring an encryption device (104), wherein the method comprises the following steps:
- providing a control unit (102), wherein the control unit (102) comprises a sensor unit (108) and a processing unit (110),
- receiving first signals from sensors (106) by the sensor unit (108), wherein the first signals signal whether a movement of the encryption device (104) and/or an impact of a mechanical and/or electromagnetic force on the encryption device (104) is occurring,
- sending second signals to the processing unit (110) by the sensor unit (108), wherein the second signals contain at least one first item of information which is already contained in the first signals,
- making the first item of information relating to the second signals available to the encryption device (104) by means of the processing unit (110), wherein the first item of information signals that the movement of the encryption device (104) and/or the impact of the mechanical and/or electromagnetic force on the encryption device (104) is occurring, wherein the first item of information is embodied such that as a response the encryption device (104) introduces measures for protecting the data,
- wherein an external logic is connected via an interface (116) of the control unit (102), said external logic comprising an operating state controller (130) of the encryption device (104), by means of which an operating state of the encryption device (104) is changed such that as a response to the first item of information the processing unit (110) sends a second item of information to the external logic, wherein the second item of information signals that the movement of the encryption device (104) and/or the impact of the mechanical and/or electromagnetic force on the encryption device (104) is occurring, wherein the second item of information prompts the operating state controller (130) to change the operating state of the encryption device (104),
wherein in the event that the result of the evaluation by means of the processing unit (110) is that a security-critical situation exists for the encryption device (104) to be monitored, the processing unit (110) sends a signal to a potential-free relay contact, which then actuates an off switch for the operation of the encryption device (104) to be monitored and wherein in the event that the result of the evaluation of the processing unit (110) is that a security-critical situation is not or no longer present, sends a signal to the interface (116) for external logic, which effects an actuation of a reset button for resuming the operation of the encryption device to be monitored.

11. Computer program product, in particular digital storage medium, with instructions which can be executed by a processor for carrying out the method steps according to claim 10.

## Revendications

1. Système (100), composé d'un appareil (104) de chiffrement et d'une unité (102) de commande pour contrôler l'appareil (104) de chiffrement,
• dans lequel l'appareil (104) de chiffrement est constitué pour chiffrer des données,
• dans lequel l'unité (102) de commande comprend une unité (108) de capteur et une unité (110) de traitement,
• dans lequel l'unité (108) de capteur est constituée pour recevoir des premiers signaux de capteur (106), qui servent à détecter un déplacement de l'appareil (104) de chiffrement et/ou une action d'une force mécanique et/ou électromécanique sur l'appareil (104) de chiffrement, l'unité (108) de capteur étant constituée, en outre, pour envoyer des deuxièmes signaux à l'unité (110) de traitement,
• dans lequel les deuxièmes signaux contiennent au moins une première information, qui est contenue déjà dans les premiers signaux, dans lequel l'unité (110) de traitement est constituée pour mettre la première information sur les deuxièmes signaux à disposition de l'appareil (104) de chiffrement, dans lequel la première information signale que le déplacement de l'appareil (104) de chiffrement et/ou l'action de la force mécanique et/ou électromécanique sur l'appareil (104) de chiffrement a lieu,
• dans lequel la première information est constituée de manière à ce que l'appareil (104) de chiffrement déclenche, comme réaction, des mesures de protection des données,
• dans lequel l'unité (102) de commande est pourvue d'une interface (116) de raccordement d'une logique extérieure, la logique extérieure comprenant un régleur (130) de l'état de fonctionnement de l'appareil (104) de chiffrement, constitué pour changer un état de fonctionnement de l'appareil (104) de chiffrement, l'unité (110) de traitement étant constituée pour envoyer à la logique extérieure, en réaction à la première information, une deuxième information, dans lequel la deuxième information signale que le déplacement de l'appareil (104) de chiffrement et/ou l'action de la force mécanique et/ou électromagnétique a lieu sur l'appareil (104) de chiffrement, la deuxième information faisant que le régleur (130) de l'état de fonctionnement change l'état de fonctionnement de l'appareil (104) de chiffrement,
• dans lequel, dans le cas où l'évaluation par l'unité (110) de traitement indique qu'il y a une situation critique du point de vue de la sécurité pour l'appareil (104) de chiffrement à contrôler, l'unité (110) de traitement envoie un signal à un contact de relais sans potentiel, qui actionne un interrupteur de mise hors service du fonctionnement de l'appareil (104) de chiffrement à contrôler et dans le cas où l'évaluation de l'unité (110) de traitement indique qu'il n'y pas ou qu'il n'y a plus une situation critique du point de vue de la sécurité, elle envoie un signal à l'interface (116) pour la logique extérieure, qui provoque un actionnement d'une touche de remise à l'état initial pour reprendre le fonctionnement de l'appareil de chiffrement contrôlé.

2. Système (100) suivant la revendication 1, dans lequel l'unité (110) de traitement est constitué, en outre, pour envoyer un message d'avertissement à l'appareil (104) de chiffrement, dans le cas où les deuxièmes signaux signalent que le déplacement de l'appareil (104) de chiffrement et/ou l'action de la force mécanique et/ou électromagnétique sur l'appareil (104) de chiffrement a lieu.

3. Système (100) suivant l'une des revendications 1 ou 2, dans lequel l'unité (102) de commande comprend, en outre, un module (112) de configuration, le module (112) de configuration étant constitué :
- pour mettre à disposition une configuration des capteurs (106),
- pour mettre à disposition un profil de réaction des capteurs (106) lors du déplacement de l'appareil (104) de chiffrement et/ou lors de l'action de la force mécanique sur l'appareil (104) de chiffrement,
dans lequel le module de configuration est constitué pour envoyer à l'unité (110) de traitement, une troisième information sur la configuration des capteurs (106) et/ou sur le profil de réaction des capteurs (106), l'unité (110) de traitement étant constituée, en outre, pour soumettre la troisième information à une évaluation, une mise à disposition de la première information et/ou de la deuxième information et/ou du message d'avertissement s'effectuant en fonction de l'évaluation.

4. Système (100) suivant la revendication 3, dans lequel les capteurs (106) comprennent des capteurs (106) de déplacement, des capteurs de lumière et/ou des capteurs de bruit, les capteurs (106) pouvant être adaptés en ce qui concerne le profil de réaction, le profil de réaction comprenant une valeur limite définie à l'avance pour la détermination d'une sensibilité des capteurs (106), la valeur limite dépendant d'une relation dans l'espace entre l'appareil (104) de chiffrement et l'unité (102) de commande.

5. Système (100) suivant l'une des revendications précédentes, dans lequel un premier comportement de l'unité (110) de traitement et/ou un deuxième comportement de l'unité (108) de capteur peuvent être adaptés à un type de l'appareil (104) de chiffrement et/ou à un paramètre ambiant de l'appareil (104) de chiffrement et/ou à un besoin de protection défini à l'avance de l'appareil (104) de chiffrement, le premier comportement comprenant l'évaluation des deuxièmes signaux et/ou l'évaluation de la troisième information et/ou l'établissement de la première information et/ou de la deuxième information et/ou l'envoie du message d'avertissement, le deuxième comportement comprenant l'évaluation des premiers signaux.

6. Système (100) suivant l'une des revendications précédentes, dans lequel l'unité (102) de commande comprend, en outre, une mémoire (114) d'événement, la mémoire (114) d'événement étant constituée pour mettre les deuxièmes signaux en mémoire avec un horodatage.

7. Système (100) suivant l'une des revendications précédentes, dans lequel l'unité (102) de commande comprend, en outre, un tampon (118) d'énergie extérieur, le tampon (118) d'énergie extérieur étant constitué pour alimenter l'unité (102) de commande en énergie.

8. Système (100) suivant l'une des revendications précédentes, dans lequel l'appareil (104) de chiffrement est constitué pour alimenter l'unité (102) de commande en énergie.

9. Système (100) suivant la revendication 8, dans lequel l'unité (102) de commande et l'appareil (104) de chiffrement forment une unité de construction.

10. Procédé de contrôle d'un appareil (104) de chiffrement, le procédé comprenant les stades suivants :
- mise à disposition d'une unité (102) de commande, l'unité (102) de commande comprenant une unité (108) de capteur et une unité (110) de traitement,
- réception de premiers signaux de capteurs (106) par l'unité (108) de capteur, les premiers signaux signalant si un déplacement de l'appareil (104) de chiffrement et/ou une action d'une force mécanique et/ou électromagnétique sur l'appareil (104) de chiffrement a lieu,
- envoi de deuxièmes signaux à l'unité (110) de traitement par l'unité (108) de capteur, les deuxièmes signaux contenant au moins une première information, qui est contenue déjà dans les premiers signaux,
- mise de la première information, sur les deuxièmes signaux à disposition de l'appareil (104) de chiffrement par l'unité (110) de traitement, la première information signalant que le déplacement de l'appareil (104) de chiffrement et/ou l'action de la force mécanique et/ou électromagnétique sur l'appareil (104) de chiffrement a lieu, la première information étant constituée de manière à ce que l'appareil (104) de chiffrement déclenche en réaction des mesures de protection des données,
- dans lequel on raccorde, par une interface (116) de l'unité (102) de commande, une logique extérieure, qui comprend un régleur (130) d'état de fonctionnement de l'appareil (104) de chiffrement, par lequel un état de fonctionnement de l'appareil (104) de chiffrement est changé, en ce que l'unité (110) de traitement envoie, en réaction à la première information, une deuxième information à la logique extérieure, la deuxième information signalant que le déplacement de l'appareil (104) de chiffrement et/ou l'action de la force mécanique et/ou électromagnétique sur l'appareil (104) de chiffrement a lieu, la deuxième information faisant que le régleur (130) d'état de fonctionnement change l'état de fonctionnement de l'appareil (104) de chiffrement,
dans lequel, dans le cas où l'évaluation par l'unité (110) de traitement indique qu'il y a une situation critique du point de vue de la sécurité pour l'appareil (104) de chiffrement à contrôler, l'unité (110) de traitement envoie un signal à un contact de relais sans potentiel, qui actionne un interrupteur de mise hors service du fonctionnement de l'appareil (104) de chiffrement à contrôler et, dans le cas où l'évaluation de l'unité (110) de traitement indique qu'il n'y pas ou qu'il n'y a plus une situation critique du point de vue de la sécurité, elle envoie un signal à l'interface (116) pour la logique extérieure, qui provoque un actionnement d'une touche de remise à l'état initial pour reprendre le fonctionnement de l'appareil de chiffrement contrôlé.

11. Produit de programme d'ordinateur, notamment support de mémoire numérique, comprenant des instructions pouvant être exécutées par un processeur pour effectuer les stades du procédé suivant la revendication 10.
